# EUROPÄISCHE PATENTANMELDUNG

(11) **EP 1 133 130 A2**
(43) Veröffentlichungstag der Anmeldung: **12.09.2001**
(21) Anmeldenummer: 01100670.7
(22) Anmeldetag: 11.01.2001
(51) Int. Cl.: H04L 29/06

(54) **Verfahren zur Übertragung von Daten zwischen Telekommunikationsanlagen**

(30) Priorität: 02.03.2000 DE 10010000
(71) Anmelder: Tenovis GmbH & Co. KG, 60362 Frankfurt am Main (DE)
(72) Erfinder: Kiram, Herwart, 61184 Karben (DE); Rohrdrommel, Dieter, 63477 Maintal (DE)
(74) Vertreter: Bohnenberger, Johannes, Dr.

(57) **Zusammenfassung**

Es wird ein Verfahren zur Übertragung von Daten zwischen Telekommunikationsanlagen vorgeschlagen, das dazu dient, Daten in Datenpaketen über eine logischen Verbindung zu versenden. Eine Schnittstelleneinheit baut die physikalische Verbindung zwischen den Telekommunikationsanlagen auf, so dass eine Anwendung über eine logische Verbindung ihre Daten versendet. Weiterhin ist von Vorteil, dass mehrere Anwendungen gleichzeitig über mehrere logische Verbindungen über die physikalischen Verbindung Daten versenden können.

## Beschreibung

### Stand der Technik

Die Erfindung geht aus von einem Verfahren zur Übertragung von Daten zwischen Telekommunikationsanlagen nach der Gattung des unabhängigen Patentanspruchs.

Es ist bereits bekannt, mittels verschiedener Verfahren Daten von Rechnern zu anderen Rechnern zu übertragen. Bei einem Rechner, der an eine Telekommunikationsanlage angeschlossen ist, wird von einer Anwendung, die Daten versenden möchte, eine ISDN (Integrated Services Data Network)-Verbindung aufgebaut. Dann werden von der Anwendung auf dem Rechner Software-Schnittstellen, sogenannte Sockets, erzeugt oder aktiviert, um Daten von der Anwendung zu übertragen. Mittels des TCP/IP (Transmission Control Protocol/Internet Protocol)-Protokolls werden die Daten von der Anwendung zu einer PPP (Point-to-Point Protocol)-Komponente als Schnittstelleneinheit übergeben. Die PPP-Komponente versendet über die entsprechende DFÜ (Datenfernübertragung)-Schnittstelle (Netzwerkkarte) bei aufgebauter ISDN-Leitung die Daten der Anwendung. Nach Übertragung der Daten schließt die Anwendung die ISDN-Verbindung,

### Vorteile der Erfindung

Das erfindungsgemäße Verfahren zur Übertragung von Daten zwischen Telekommunikationsanlagen mit den Merkmalen des unabhängigen Patentanspruchs hat demgegenüber den Vorteil, dass die Schnittstelleneinheit für die Anwendung den Verbindungsaufbau durchführt. Damit beschäftigt sich die Anwendung selbst nicht mit dem eigentlichen Verbindungsaufbau. Liegen mehrere Anwendungen vor, erspart dies Aufwand, da nicht jede Anwendung Mittel aufweisen muß, um eine Verbindung zu einem anderen Rechner herzustellen. Weiterhin gestaltet dies die Programmierung einer Anwendung und der Schnittstellen übersichtlicher, da die Anwendung selbst keine Funktionen des Verbindungsaufbaus übernehmen muß. Auch die Wartung der Software und die Identifikation eines Fehlers in der Software gestaltet sich damit einfacher.

Durch die in den abhängigen Ansprüchen aufgeführten Maßnahmen und Weiterbildungen sind vorteilhafte Verbesserungen des im unabhängigen Patentanspruch angegebenen Verfahrens zur Übertragung von Daten zwischen Telekommunikationsanlagen möglich.

Besonders vorteilhaft ist, dass als Übertragungsprotokoll das Internet-Protokoll verwendet wird, das eine weite Anwendung in verschiedenen Bereichen findet. Damit kann in einfacher Weise auf ein bekanntes Übertragungsprotokoll zurückgegriffen werden. Die Übertragung ist damit kompatibel zu anderen Anwendungen, zum Beispiel der Datenübertragung über das Internet.

Darüber hinaus ist es von Vorteil, dass von der Schnittstelleneinheit die Internetadresse, die den Daten von der Anwendung hinzugefügt wurde, in eine Telefonnummer übersetzt wird, um eine Verbindung zu einer weiteren Telekommunikationsanlage mit einem angeschlossenen Rechner über ein Telefonnetz herzustellen. Damit wird in einfacher Weise eine physikalische Verbindung geschaffen, um die Daten zu übertragen, wobei mehrere logische Verbindungen über die eine physikalische Verbindung aufgebaut werden.

Weiterhin ist es von Vorteil, dass mehrere Anwendungen gleichzeitig über die physikalische Verbindung mehrere logische Verbindungen aufbauen und somit gleichzeitig mehrere Anwendungen Daten versenden. Dies führt zu einer effizienten Nutzung des physikalischen Kanals und spart daher für eine Übertragung notwendige Ressourcen. Daher ist es auch von Vorteil, dass die Schnittstelleneinheit die Verbindung aufbaut, da sie unabhängig von den Anwendungen ist. Die Verbindung wird dann erst abgebaut, wenn die letzte logische Verbindung beendet wurde.

Schließlich ist es auch von Vorteil, dass die Schnittstelleneinheit bei einer nicht erfolgreichen physikalischen Verbindung zu dem gerufenen Rechner entweder nach einer vorgegebenen Zeit erneut versucht, den Rechner zu kontaktieren und/oder der Anwendung eine Meldung übersendet, die den Mißerfolg berichtet. Die Anwendung wird dann einem Anwender diesen Mißerfolg mitteilen.

### Zeichnung

Ausführungsbeispiele der Erfindung sind in der Zeichnung dargestellt und in der Beschreibung näher erläutert. Es zeigen Figur 1 das erfindungsgemäße Verfahren zur Übertragung von Daten zwischen Telekommunikationsanlagen, Figur 2 den Aufbau der Software in einer Telekommunikationsanlage mit angeschlossenem Rechner und Figur 3 ein Multiplex von logischen Verbindungen von verschiedenen Anwendungen, die Daten über einen physikalischen Kanal versenden.

### Beschreibung

Um Daten zwischen Telekommunikationsanlagen zu versenden, insbesondere Fehlermeldungen, muß die Daten erzeugende Anwendung dafür Sorge tragen, dass eine Verbindung aufgebaut wird und die Daten erfolgreich versendet werden. Erfindungsgemäß wird daher die Anwendung, die auf einem Rechner, der mit einer Telekommunikationsanlage verbunden ist, eine Schnittstelleneinheit aktivieren, die die physikalische Verbindung gegebenenfalls mittels einer Netzwerkkarte zu dem Rechner herstellt, zu dem die Daten übertragen werden sollen. Dabei bedient sich die Anwendung eines Übertragungsprotokolls, das die Daten in Datenpakete aufteilt und mittels der Schnittstelleneinheit versendet.

Eine Telekommunikationsanlage bezeichnet hier eine Vorrichtung, die Telekommunikationsendgeräte an ein Telekommunikationsnetz anschließt. Der Rechner, der Daten versendet, ist hier Teil der Telekommunikationsanlage. Das erfindungsgemäße Verfahren läuft daher auf der Telekommunikationsanlage selbst ab. Der empfangende Rechner muß nicht notwendigerweise auch Teil einer Telekommunikationsanlage sein.

Die Schnittstelleneinheit stellt also den physikalischen Kanal bereit, während das Übertragungsprotokoll für die logische Verbindung beziehungsweise logische Verbindungen verantwortlich ist. Das Trennen von physikalischer und logischer Verbindung ermöglicht, dass mehrere Anwendungen gleichzeitig über einen physikalischen Kanal ihre Daten versenden können, da sie ihre logischen Verbindungen über diesen physikalischen Kanal parallel zu anderen Anwendungen herstellen.

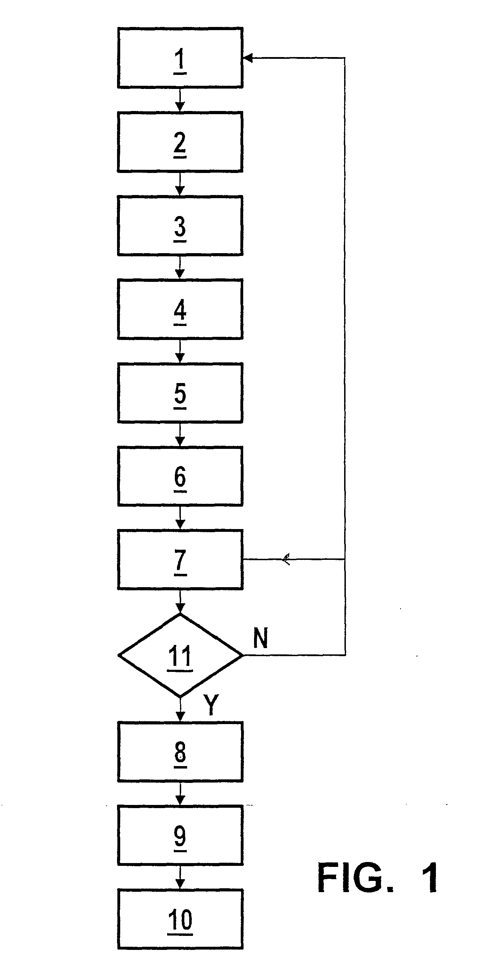

In Figur 1 ist das erfindungsgemäße Verfahren zur Übertragung von Daten zwischen Telekommunikationsanlagen dargestellt. In Verfahrensschritt 1 werden Daten von einer Anwendung, die auf einem Rechner läuft, der mit einer ersten Telekommunikationsanlage verbunden ist, erzeugt. Der Rechner ist hier Teil der ersten Telekommunikationsanlage, er befindet sich also in dem Gehäuse der ersten Telekommunikationsanlage. Alternativ kann der Rechner auch getrennt von der ersten Telekommunikationsanlage sein. Die zu übertragenden Daten stellen hier Fehlermeldungen dar, aber auch Wartungsdaten und/oder Abrechnungsdaten sind hier möglich.

In Verfahrensschritt 2 erkennt die Daten erzeugende Anwendung die Notwendigkeit, diese Daten einem weiteren Rechner zu übertragen. In Verfahrensschritt 3 aktiviert bzw. erzeugt dann die Anwendung Software-Schnittstellen, die es der Anwendung gestatten, Daten zur Übertragung weiterzugeben. In der bekannten Windows-Umgebung werden diese Software-Schnittstellen Sockets genannt.

In Verfahrensschritt 4 ruft die Anwendung ein Übertragungsprotokoll auf. Hier ist dieses Übertragungsprotokoll das TCP/IP-Protokoll. Das TCP/IP-Protokoll akzeptiert beliebig lange Nachrichten und teilt die Nachrichten in Verfahrensschritt 5 in Datenpakete gleicher Länge auf. Die Datenpakete werden dann getrennt versendet. Die Datenpakete brauchen nicht in der richtigen Reihenfolge am Empfänger ankommen, für diesen Fall weisen die Datenpakete Zähler auf, die das Ordnen der Datenpakete durch den Empfänger ermöglichen. Da hier jedoch eine Punktzu-Punkt-Verbindung vorliegt, werden die Datenpakete in der richtigen Reihenfolge ankommen. Es wird hier eine Sendewiederholung eines Datenpakets durchgeführt, wenn eine fehlerhafte Übertragung des Datenpakets festgestellt wird. Das TCP/IP-Protokoll führt also hier eine Aufteilung der Daten in Datenpakete durch. Verfahrensschritt 3 und 4 können auch in einem Verfahrensschritt zusammengefaßt sein, wobei beim Aufbau der Socket gleichzeitig das TCP/IP-Protokoll aufgerufen wird.

Die Datenpakete werden dann an eine Schnittstelleneinheit in Verfahrensschritt 6 übergeben. In Verfahrensschritt 7 untersucht die Schnittstelleneinheit das erste Datenpaket auf die Adresse, wohin die Daten versendet werden sollen. Die Adresse liegt als Internetadresse in dem ersten Datenpaket vor. Die Schnittstelleneinheit weist jedoch einen Speicher auf, der eine Zuordnung von Internetadressen und Telefonnummern ermöglicht, dafür ist dieser Speicher mit entsprechenden Verknüpfungen angefüllt. Alternativ ist es auch möglich, dass die Schnittstelleneinheit über ein Kommunikationsnetz Daten abfragt, um die Internetadresse einer Telefonnummer zuzuordnen. Die Schnittstelleneinheit ist hier eine im Vergleich zum Stand der Technik modifizierte PPP-Komponente, die nun selbst die Verbindung zu der zweiten Telekommunikationsanlage herstellt.

Mittels der gefundenen Telefonnummer wird dann eine Verbindung zu einer zweiten Telekommunikationsanlage, an die der Rechner angeschlossen ist, zu dem die Daten übertragen werden sollen, über ISDN aufgebaut, wobei weitere Telekommunikationsanlage auf dem Übertragungsweg liegen können, die die Datenpakete unverändert weiter versenden. Bei ISDN handelt es sich um eine digitale Übertragungstechnik, die für die Übertragung von Text, Audio, Video und Bildern geeignet ist. ISDN ist auf dem vorhandenen Telefonnetz implementiert. Die für den Aufbau, die Aufrechterhaltung und den Abbau der Meldungen notwendigen Funktionen von ISDN werden verwendet.

Der erfolgreiche Aufbau der ISDN-Verbindung wird der Schnittstelleneinheit der empfangenden Telekommunikationsanlage von ISDN-Funktionen mitgeteilt. Die Schnittstelleneinheit der Empfangsseite baut danach die PPP-Verbindung mit der Sendeseite auf. Danach wird die TCP-Verbindung aufgebaut.

Ist der Verbindungsaufbau gelungen, wird nach Verfahrensschritt 11 in Verfahrensschritt 8 mit der Übertragung der Datenpakete begonnen, wobei die ersten Datenpakete dem Aufbau der virtuellen PPP/TCP-Verbindung zwischen den Rechnern dienen. Ist der Verbindungsaufbau jedoch nicht gelungen, dann wird nach einer vorgegebenen Zeit in Verfahrensschritt 7 erneut versucht, eine Verbindung herzustellen. Weiterhin wird der Anwendung, die ihre Daten über die erste Telekommunikationsanlage versendet, eine Meldung versendet, dass der Verbindungsaufbau mißlungen ist. Gegebenenfalls werden auch noch die anderen Maßnahmen wie ein erneutes Versuchen des Verbindungsaufbaus mitgeteilt, wobei dies auch automatisch ablaufen kann, ohne dass der Benutzer eine Meldung darüber erhält. Dadurch ist ein Anwender der Anwendung in der Lage, diese Information aufzunehmen und entsprechende Handlungen vorzunehmen.

Die Anwendung kann auch selbständig daraufhin eine weitere Internetadresse der Schnittstelleneinheit übermitteln, so dass die Schnittstelleneinheit diese neue Internetadresse in eine Telefonnummer übersetzt, um zu dieser Alternativadresse eine Kommunikationsverbindung aufzubauen. Dazu muß die Anwendung jedoch eine neue Socket aufbauen. Nach einer vorgegebenen Zahl von Versuchen wird die Schnittstelleneinheit den Verbindungsaufbau nicht mehr erneut versuchen. Auch dies wird der Anwendung mitgeteilt, so dass die Anwendung gegebenenfalls auf alternative Internetadressen zurückgreifen kann, wobei dann ebenso eine neue Socket aufgebaut wird. Weiterhin kann der Rechner bei einem erfolglosen Verbindungsaufbau die Nachricht in einem Speicher halten, um einen erneuten Verbindungsaufbau zu versuchen.

In Verfahrensschritt 8 wird die Übertragung der Daten in Datenpaketen durchgeführt. Die Daten werden von der empfangenden Telekommunikationsanlage mit dem angeschlossenen Rechner verarbeitet. Nach Aufbau der logischen PPP- und TCP-Verbindungen zwischen den beiden Rechnern werden die Daten der Anwendung, die auf diesem Rechner läuft, übergeben. Dies wird in Verfahrensschritt 9 durchgeführt. Nach Erfolg der Übertragung wird in Verfahrensschritt 10 von der Schnittstelleneinheit die Verbindung abgebrochen und der Anwendung diese Meldung übergeben. Versenden mehrere Anwendungen über aufgebaute logische Kanäle auf dem physikalischen Kanal Daten, dann wird der physikalische Kanal von der Schnittstelleneinheit erst abgebaut, wenn alle übertragenden Anwendungen ihre Übertragungen abgeschlossen haben. Es darf damit kein logischer Kanal mehr vorliegen, wenn der physikalische Kanal abgebaut werden soll.

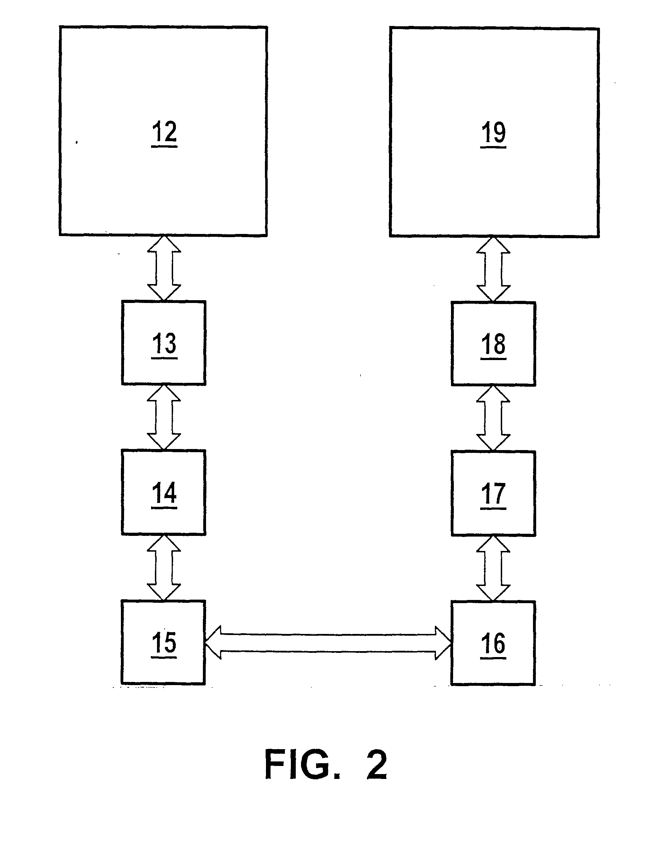

In Figur 2 ist schematisch der Aufbau der Softwarestrukturen auf einem sendenden und einer empfangenen Telekommunikationsanlage dargestellt. Die erste Telekommunikationsanlage, die durch die linke Reihe repräsentiert ist, weist eine Anwendung 12 auf, die Daten erzeugt, ein Socket 13, das für die Übertragung der Daten von der Anwendung zu dem Übertragungsprotokoll 14 notwendig ist und dem Schnittstellenelement 15, das den physikalischen Kanal herstellt und die physikalische Übertragung gewährleistet.

Die zweite Telekommunikationsanlage, die Daten von der ersten Telekommunikationsanlage empfängt, wird durch die rechte Spalte repräsentiert. Eine Schnittstelleneinheit 16 empfängt Daten über den physikalischen Kanal und übergibt sie dem TCP/IP-Protokoll 17, das die Daten aus den Datenpaketen wieder zusammmenfügt. In Verfahrensschritt 18 wird mittels eines Sockets der Datenstrom zu der Anwendung 19 übertragen, die die Daten darstellt und/oder weiter verarbeitet. Das Verfahren wird hier wie in Figur 1 beschrieben durchgeführt. Die zweite Telekommunikationsanlage muß nicht notwendigerweise die gleiche Softwarestruktur wie die erste Telekommunikationsanlage aufweisen. Die Schnittstelleneinheit 16 kann beispielsweise so sein, wie es aus dem Stand der Technik bekannt ist.

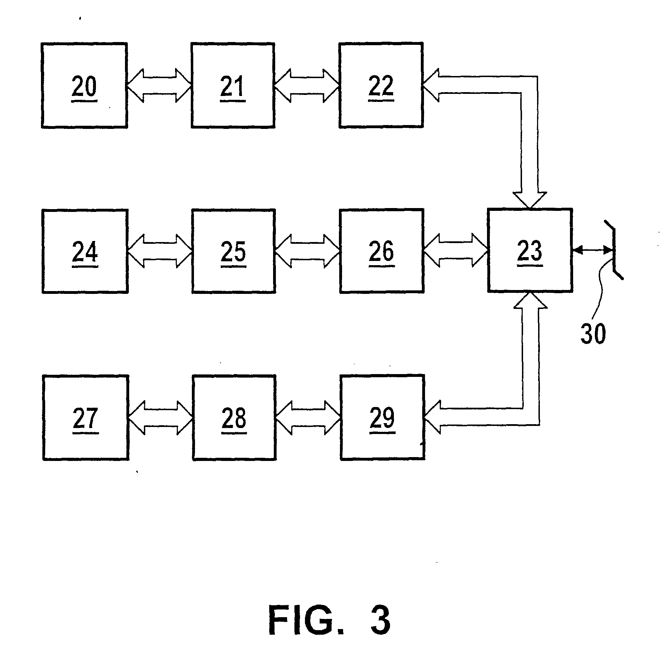

In Figur 3 ist dargestellt, wie mehrere Anwendungen im Multiplex über eine Schnittstelleneinheit 23 ihre Daten über mehrere logische Kanäle mittels des physikalischen Kanals 30 übertragen. Eine Anwendung 20 übergibt über ihre Socket 21 zu einem Übertragungsprotokoll 22 die Daten. Von dem Übertragungsprotokoll, vorzugsweise TCP/IP, werden Daten zu der Schnittstelleneinheit 23 übertragen, die dann die Daten über einen logischen Kanal über die Leitung zwischen den Telekommunikationsanlagen überträgt. In der gleichen Weise erzeugen die Anwendungen 24 und 27 mittels ihrer Sockets 25 und 28 sowie des Internetprotokolls TCP/IP 26 und 29 über getrennte logische Kanäle mittels der Schnittstelleneinheit 23 über den physikalischen Kanal 30 Daten. Es können soviel Daten parallel Daten übertragen wie es die maximale Bandbreite der Verbindung zuläßt. In einer Weiterbildung ist vorgesehen, dass die Daten von den jeweiligen Anwendungen auch gepuffert werden, um einem Datenverlust zuvor zu kommen. Dazu weisen die Telekommunikationsanlagen geeignete Pufferspeicher auf.

Befinden sich auf dem Übertragungsweg weitere Telekommunikationsanlagen zwischen der ersten und zweiten Telekommunikationsanlage, dann werden diese Telekommunikationsanlage die empfangenen Datenpakete unverändert weiter versenden.

## Patentansprüche

1. Verfahren zur Übertragung von Daten zwischen Telekommunikationsanlagen, wobei die Daten von einer Anwendung (12), die mit einer ersten Telekommunikationsanlage verbunden ist, erzeugt werden, wobei die Daten der Anwendung (12) von einem Übertragungsprotokoll (14) in Datenpakete aufgeteilt werden, **dadurch gekennzeichnet**, dass eine Schnittstelleneinheit (15) der ersten Telekommunikationsanlage von der Anwendung (12) aufgerufen wird, dass die Schnittstelleneinheit (15) von der Anwendung (12) mittels des Übertragungsprotokolls (14) die Datenpakete erhält und anhand des ersten Datenpakets ermittelt, zu welcher zweiten Telekommunikationsanlage eine Verbindung aufzubauen ist, dass die Schnittstelleneinheit (15) die Verbindung zu der zweiten Telekommunikationsanlage aufbaut, dass bei einer erfolgreichen Verbindung die Datenpakete zu der zweiten Telekommunikationsanlage übertragen werden, wobei Telekommunikationsanlagen, die sich auf dem Übertragungsweg zwischen der ersten und der zweiten Telekommunikationsanlage befinden, die Datenpakete unverändert weiter übertragen, wobei die Anwendung (12) dabei mit der zweiten Telekommunikationsanlage mittels des Übertragungsprotokolls (14) kommuniziert, und dass nach Beendigung der Übertragung die Verbindung von der Schnittstelleneinheit (15) abgebaut wird.

2. Verfahren nach Anspruch 1, **dadurch gekennzeichnet**, dass als das Übertragungsprotokoll (14) ein Internetprotokoll verwendet wird.

3. Verfahren nach Anspruch 3, **dadurch gekennzeichnet**, dass die Schnittstelleneinheit (15) mittels des ersten Datenpakets anhand einer Internetadresse eine Telefonnummer ermittelt.

4. Verfahren nach einem der Ansprüche 1 bis 3, **dadurch gekennzeichnet**, dass mehrere Anwendungen, die mit der ersten Telekommunikationsanlage verbunden sind, Datenpakete über die Verbindung zu der zweiten Telekommunikationsanlage gleichzeitig versenden.

5. Verfahren nach einem der vorhergehenden Ansprüche, **dadurch gekennzeichnet**, dass die Schnittstelleneinheit (15) nach einem erfolglosen Verbindungsversuch erneut versucht, eine Verbindung mit der zweiten Telekommunikationsanlage aufzubauen oder dass die Schnittstelleneinheit (15) nach einem erfolglosen Verbindungsversuch eine Meldung an die Anwendung versendet.
